# EUROPÄISCHE PATENTSCHRIFT

(11) **EP 3 380 342 B1**
(45) Veröffentlichungstag und Bekanntmachung des Hinweises auf die Patenterteilung: **26.01.2022**
(21) Anmeldenummer: 16754495.6
(22) Anmeldetag: 22.08.2016
(51) Int. Cl.: B60C 11/16

(54) **FAHRZEUGLUFTREIFEN**
PNEUMATIC VEHICLE TIRE
PNEU DE VÉHICULE

(30) Priorität: 23.11.2015 DE 102015223091
(43) Veröffentlichungstag der Anmeldung: 03.10.2018
(60) Teilanmeldung: 19165063.9
(73) Patentinhaber: Continental Reifen Deutschland GmbH, 30165 Hannover (DE)
(72) Erfinder: SCHLITTENHARD, Jan, 30900 Wedemark (DE); BERGER, Christoph, 30173 Hannover (DE); RAUTIAINEN, Juha, 40520 Jyväskylä (FI); KUMPULAINEN, Ari, 41340 Laukaa (FI); SENG, Matthias, 30453 Hannover (DE)
(74) Vertreter: Continental Corporation
(86) Internationale Anmeldenummer: PCT/EP2016/069758
(87) Internationale Veröffentlichungsnummer: WO 2017/088995

(56) Entgegenhaltungen:
- CA-A- 755 407
- JP-A- S59 199 307
- JP-A- 2011 189 784
- JP-U- H0 671 210
- US-A1- 2014 338 806

## Beschreibung

Die Erfindung betrifft einen Fahrzeugluftreifen nach dem Oberbegriff des Patentanspruches 1.

Ein derartiger Fahrzeugluftreifen mit einer profilierten Lauffläche, in die eine Vielzahl einzelner Spikes integriert sind, von denen jeder Spike einen Stift oder Pin mit einem aus der Lauffläche hervorstehenden, freien Ende und einem diesem freien Ende gegenüberliegend angeordneten Fuß aufweist, dessen Fläche größer ist, als die des Pins, geht beispielsweise aus der RU 2 148 498 C1 hervor. Der Pin ist bei dieser Lösung bis auf das aus der Lauffläche herausragende, freie Ende vollständig in einem Polymerkörper aufgenommen und von diesem umschlossen. Das Polymer wird in diesem Fall für die Gewichtsreduktion des Spikes verwendet und bildet im unteren, dem freien Ende des Spikes gegenüberliegenden Teil den erwähnten Fuß. Der gesamte Spike wird nach seiner Herstellung im Bereich der Lauffläche in den Fahrzeugluftreifen integriert.

Allgemein sind Fahrzeugluftreifen mit Spikes aus Stahl, Aluminium oder Kunststoffen bereits bekannt und im Einsatz. Darüber hinaus ist es auch bekannt, die Spikes aus einem Gummiwerkstoff herzustellen. Eine derartige Lösung geht beispielsweise aus der JP H08300911 A oder aus der JP 6239112, der EP 0 383 401 A1 beziehungsweise der DE 697 17 544 T2 hervor, wobei gemäß dem Offenbarungsgehalt dieser Schriften in das Gummi zusätzlich Fasermaterialien zur Verfestigung und Verbesserung der Kraftübertragung eingebettet sind. In der Praxis hat sich dies nicht bewährt, da die Fasermaterialien eine ungenügende Abriebbeständigkeit aufweisen, um eine Kraft übertragende Funktion eines Pins über die Lebensdauer eines Fahrzeugluftreifens hinweg übernehmen zu können. Üblicherweise werden die Pins aus Hartmetall hergestellt.

Aus der JP H06 71210 U ist ein Fahrzeugluftreifen mit einer profilierten Lauffläche bekannt, in die eine Vielzahl einzelner Spikes integriert ist, von denen jeder Spike einen Pin mit einem aus der Lauffläche hervorstehenden, freien Ende und einem diesem freien Ende gegenüberliegend angeordneten Fuß aufweist, dessen Fläche größer ist, als die des Pins, wobei der Pin in einen Mantel integriert ist. Der gesamte Spike wird dabei in eine schlitzförmige Ausnehmung in der Lauffläche des Fahrzeugreifens eingefügt.

Die JP S59 199307 A betrifft hingegen einen Fahrzeugluftreifen mit einer profilierten Lauffläche, in die eine Vielzahl einzelner Spikes integriert ist, von denen ebenfalls jeder Spike einen Pin mit einem aus der Lauffläche hervorstehenden, freien Ende und einem diesem freien Ende gegenüberliegend angeordneten Fuß aufweist, dessen Fläche größer ist, als die des Pins. Die Druckschrift offenbart verschiedene Ausführungsvarianten des Fußes des Spikes, um dessen Fixierung in der Lauffläche des Fahrzeugluftreifens zu verbessern.

Auch die JP 2011 189784 A offenbart einen Fahrzeugluftreifen mit einer profilierten Lauffläche, in die eine Vielzahl einzelner Spikes integriert ist, von denen jeder Spike einen Pin mit einem aus der Lauffläche hervorstehenden, freien Ende und einem diesem freien Ende gegenüberliegend angeordneten Fuß aufweist, dessen Fläche größer ist, als die des Pins. Bei der in der JP 2011 189784 A beschriebenen Lösung weist die Lauffläche des Fahrzeugluftreifens eine von dem übrigen Grundwerkstoff abweichende Materialbeschaffenheit auf, sodass auf diese Weise die Fixierung des Spikes im Fahrzeugluftreifen verbessert wird.

Schließlich geht aus der US 2014/338806 A1 ein Fahrzeugluftreifen mit einer profilierten Lauffläche hervor, in die eine Vielzahl einzelner Spikes integriert ist, von denen jeder Spike einen Pin mit einem aus der Lauffläche hervorstehenden, freien Ende und einem diesem freien Ende gegenüberliegend angeordneten Fuß aufweist, dessen Fläche größer ist, als die des Pins. Der Pin ist bei dieser Ausführung eines Spikes außermittig auf der Oberfläche des Spikes angeordnet, das heißt, er liegt seitlich versetzt zur Längsachse des Spikes. Der Fahrzeugluftreifen seinerseits weist zwei unterschiedliche Gummimischungen auf, um die Aufnahme des Spikes zu verbessern.

Aus der als nächstliegender Stand der Technik zu betrachtenden CA 755 407 A ist ein Fahrzeugluftreifen bekannt, in dessen profilierte Lauffläche eine Vielzahl einzelner Spikes integriert ist, von denen jeder Spike einen Pin mit einem aus der Lauffläche hervorstehenden, freien Ende und einem diesem freien Ende gegenüberliegend angeordneten Fuß aufweist, dessen Fläche größer ist, als die des Pins, wobei der Pin und/oder der Fuß zumindest abschnittsweise in einen Gummimantel integriert und der Fuß des Spikes in Richtung freies Ende des Pins betrachtet, in einen Absatz übergeht, in den der Pin eingesetzt oder eingeformt ist.

Für den Einsatz von Spikes in Fahrzeugluftreifen sind strenge gesetzliche Grenzwerte einzuhalten, die den durch die Spikes hervorgerufenen Straßenverschleiß reduzieren sollen. Eine Vorgabe für die Hersteller von Fahrzeugluftreifen besteht darin, die Grenzwerte unabhängig von der Anzahl der im Fahrzeugluftreifen vorhandenen Spikes einzuhalten. Dabei ist es bekannt, dass das Gewicht der verwendeten Spikes einen Haupteinflussparameter für den sich einstellendem Straßenverschleiß darstellt. Aus diesem Grund geht die Tendenz bei der Herstellung von Fahrzeugluftreifen mit Spikes dahin, Spikes mit geringerem Gewicht einzusetzen.

Eine Lösung des Problems könnte der Einsatz leichterer Werkstoffe, also beispielsweise die Verwendung von Kunststoffen sein. Diesen Weg geht die zuvor bereits erwähnte RU 2 148 498 C1.

Ein ganz wesentlicher Zielkonflikt besteht demnach grundsätzlich darin, dass die verwendeten Spikes einerseits abriebfest sein sollen, sodass zumindest die verwendeten Pins aus harten Werkstoffen, wie dem bereits erwähnten Hartmetall, hergestellt werden. Andererseits soll der Verschleiß der Straßenoberflächen nicht ungebührlich hoch sein, was die erwähnte Gewichtsreduzierung erforderlich macht, sodass damit zumindest die Aufschlagenergie des Pins auf die Straßenoberfläche reduziert wird.

Um die Griffigkeit der Fahrbahnoberfläche und damit die Verkehrssicherheit zu erhöhen, wird in vielen Ländern Sand als Streugut eingesetzt. Dabei ist es unvermeidbar, dass das Streugut zwischen dem Reifen und der Straße zermahlen wird und somit Staub und sogar lungengängiger Feinstaub entsteht, was zum Schutz der Gesundheit reduziert oder vermieden werden sollte. Aus wissenschaftlichen Untersuchungen ist ferner bekannt, dass die Korngröße des Streugutes einen Einfluss auf die Feinstaubmenge hat. Je kleiner die Korngröße des Streugutes ist, desto höher ist die Feinstaubemission. Deswegen besteht seit Jahren der Trend, Sand durch Bruchsteinsplitt zu ersetzen. Nachteilig ist beim Einsatz von Bruchsteinsplitt jedoch, dass die in Fahrzeugluftreifen vorhandenen Spikes verstärkt abgenutzt werden, insbesondere wenn sie aus Aluminium oder Kunststoffen bestehen. Infolge der verstärkten Abnutzung "sinkt" nämlich der Spikekörper unter die Oberfläche der Lauffläche ab, was wiederum die Spikelochkanten und -flanken durch das Eindringen von Partikeln, wie kleinen Steinen, einem besonderen, schneidenden Abrieb aussetzt. Durch den starken Abrieb werden die seitlichen Haltekräfte auf den Spike reduziert, was zu einem stärkeren Verkippen des Spikes führt. Dies führt wiederum zu einer reduzierten Haftung des Fahrzeugluftreifens auf winterlichem Untergrund, insbesondere auf Eisoberflächen. Die Reduktion der seitlichen Haltekräfte kann sogar zu einem vollständigen Spikeverlust führen, was natürlich vermieden werden muss.

Der Erfindung liegt die Aufgabe zugrunde, einen mit Spikes ausgestatteten Fahrzeugluftreifen bereitzustellen, der ein im Vergleich mit bekannten Lösungen reduziertes Eigengewicht und zugleich einen verminderten Spikeverschleiß sowie einen reduzierten Straßenverschleiß aufweist, dessen Wärmeübergang zudem verbessert ist und der eine Verbesserung der Fixierung des Gummimantels in dem Fahrzeugluftreifen ermöglicht.

Die Erfindung löst diese Aufgabenstellung mit den Merkmalen des Patentanspruches 1. Weitere Ausgestaltungen der Erfindung sind Gegenstand der sich anschließenden Unteransprüche.

Ein Fahrzeugluftreifen mit einer profilierten Lauffläche, in die eine Vielzahl einzelner Spikes integriert sind, von denen jeder Spike einen Pin mit einem aus der Lauffläche hervorstehenden, freien Ende und einem diesem freien Ende gegenüberliegend angeordneten Fuß aufweist, dessen Fläche größer ist, als die des Pins, wobei der Pin und/oder der Fuß zumindest abschnittsweise in einen Gummimantel integriert ist und der Fuß des Spikes in Richtung freies Ende des Pins betrachtet, in einen Absatz übergeht, in den der Pin eingesetzt oder eingeformt ist, wurde erfindungsgemäß dahingehend weitergebildet, dass der Fuß und/oder der Absatz zumindest abschnittsweise eine durch in Längsrichtung des Pins verlaufende Rippen gebildete flügel- oder sternförmige Querschnittsgeometrie aufweist.

Mit der Erfindung werden gleich mehrere Vorteile erreicht. Durch die Verwendung eines Gummimantels wird das Abriebverhalten des Spikes maßgeblich gegenüber herkömmlichen Spikes aus Stahl oder Aluminium beziehungsweise aus Kunststoff verbessert, weil der Gummimantel, anders als die bislang üblichen Werkstoffe, sehr unempfindlich auf den Abrieb auf der Straßenoberfläche reagiert. Dies führt dazu, dass sich der Spike nicht viel stärker abnutzt, als die ihn umgebende Lauffläche des Fahrzeugluftreifens. Die "Lochkanten" werden nicht so stark erodiert, wie dies bislang der Fall war. Darüber hinaus ist festzustellen, dass mit der erfindungsgemäßen Lösung die seitlichen Haltekräfte über die gesamte Lebensdauer hinweg betrachtet erhalten bleiben, was zu einer gleichbleibenden Haftung, insbesondere auf Eisflächen, führt. Beim Auftreffen auf die Straßenoberfläche absorbiert der Gummimantel die Stoßenergie und somit werden beispielsweise Steine des Straßenbelages nicht mehr zerschlagen. Dieser Effekt führt zu einer reduzierten Straßenabnutzung. Durch die erfindungsgemäße Lösung wird zudem infolge der Dämpfung des Aufschlags des Spikes auf die Straßenoberfläche eine Geräuschreduktion erreicht. Dies bildet einen Komfortvorteil und kann vom Anwender unmittelbar wahrgenommen werden. Darüber hinaus wird auch die Lärmbelastung der Umwelt reduziert.

Durch die Verwendung von Spikes mit einem Gummimantel kann jedoch vor allem das Spikegewicht erheblich gesenkt werden, weil Werkstoffe höherer Dichte durch Materialien geringerer Dichte ersetzt werden. So beträgt beispielsweise die Dichte von Stahl ρ ≈7,8 g/cm³, während die Dichte von Aluminium nur ρ ≈2,7 g/cm³, von Kunststoff (Plastik) ρ ≈ 1,2-2,2 g/cm³ und von Gummi p ≈1,0-1,2 g/cm³ beträgt. Da das Spikegewicht der ausschlaggebende Parameter für den Straßenverschleiß ist, ist diese erfindungsgemäße Lösung von besonderem Vorteil. Zur Verbesserung des Wärmeübergangs weist der Fuß und/oder der Absatz zudem zumindest abschnittsweise eine durch in Längsrichtung des Pins verlaufende Rippen gebildete flügel- oder sternförmige Querschnittsgeometrie auf.

Eine Ausgestaltung der Erfindung geht dahin, dass der Pin in den Fuß eingefügt oder eingeformt ist. Mit anderen Worten bestehen der Pin und der Fuß aus je einem Bauelement, die miteinander verbunden werden. Diese Ausführungsvariante hat den entscheidenden Vorteil, dass für den Pin und den Fuß jeweils auch unterschiedliche Werkstoffe verwendet werden können. Die Verbindung zwischen Pin und Fuß kann eine stoffschlüssige Verbindung sein und beispielsweise durch Kleben oder Löten hergestellt werden. Ebenso ist auch eine formschlüssige Verbindung oder eine kraftschlüssige Verbindung im Sinne eines Presssitzes möglich.

Ein weiterführender Vorschlag der Erfindung geht dahin, dass der Pin aus einem harten Werkstoff, wie Hartmetall und der Fuß aus einem vergleichsweise weicheren Werkstoff, wie Aluminium oder Kunststoff besteht. Mit anderen Worten bedeutet dies, dass zum Beispiel lediglich ein geringer Teil des Pins, vorzugsweise nur dessen freies Ende, das aus der Oberfläche der Lauffläche herausragt, aus einem Hartmetall hergestellt ist und die übrigen Teile aus dem weicheren Werkstoff bestehen. Der Einsatz von Hartmetall für den Pin ist bei der erfindungsgemäßen Lösung möglich, weil eine Ummantelung des Pins mit dem Gummimantel erfolgt und dieser, wie dies eingangs bereits erläutert wurde, die Aufschlagsenergie auf den Straßenuntergrund absorbiert. Dadurch wird trotz des verwendeten Hartmetalls eine Reduzierung der Straßenschäden erreicht.

Natürlich ist es möglich, den Gummimantel aus einem Gummiwerkstoff herzustellen, der die gleiche Shore-Härte aufweist beziehungsweise aus dem gleichen Gummiwerkstoff besteht, wie dies für die Lauffläche des Fahrzeugluftreifens vorgesehen ist. Jedoch kann es auch von Vorteil sein, dass die Shore-Härte des Gummimantels von der des Fahrzeugluftreifens abweicht. Dies kann bedeuten, dass der Gummimantel, verglichen mit dem Fahrzeugluftreifen beziehungsweise dessen Lauffläche, über eine geringere oder höhere Shore-Härte verfügt. Mit diesen Ausführungsvarianten lässt sich die Einbindung des Spikes in den Fahrzeugluftreifen für unterschiedliche Anwendungsfälle optimieren. Eine weitere Ausführungsvariante besteht darin, dass der Gummimantel aus einer von der Lauffläche abweichenden Gummimischung besteht. Durch Verwendung unterschiedlicher Gummimischungen für die Lauffläche und den Gummimantel lassen sich die Eigenschaften des in die Lauffläche eingesetzt Spikes gezielt beeinflussen.

Besonders einfach gestaltet sich die Ausführung des Spikes in einem erfindungsgemäßen Fahrzeugluftreifen, wenn der Gummimantel den gesamten Fuß und Pin vollständig umhüllend ausgeführt ist. Anders ausgedrückt weist ein derartiger Spike zumindest unmittelbar nach seiner Herstellung auch im Bereich des Pins und des Fußes zumindest eine Gummischicht auf.

Eine andere Gestaltungsmöglichkeit des Spikes eines Fahrzeugluftreifens nach der Erfindung besteht ferner darin, dass der Gummimantel ausgehend von der dem freien Ende des Pins zugewandten Oberfläche des Fußes, bis unmittelbar unterhalb des freien Endes des Pins ausgebildet ist. Bei der zuletzt genannten Ausführung bleibt der Fuß folglich frei von einer Beschichtung mit Gummiwerkstoff. Alternativ hierzu ist es auch möglich, den Gummimantel so auszuführen, dass er den Fuß vollständig ummantelt und durchgehend bis unmittelbar unterhalb des freien Endes des Pins ausgebildet ist. Hierbei handelt es sich um sehr kompakte Bauweisen des in den Fahrzeugluftreifen einzusetzenden Spikes.

Dabei kann gemäß einer Weiterbildung der Erfindung der Gummimantel zumindest abschnittsweise eine kreiszylindrische, kegelige, unrunde, polygonale beziehungsweise konische und/oder taillierte Außenform aufweisen. Letztlich entscheidend für die Ausführung der äußeren Geometrie des Gummimantels ist dessen Festsitz innerhalb des Fahrzeugluftreifens, sowie der Einfluss auf die Bettungssteifigkeit zur Optimierung des Eisgriffpotentials. Hinterschneidungen oder Taillierungen verbessern dabei die Haftung des Spikes in der Lauffläche des Fahrzeugluftreifens.

Wenn der Gummimantel im Übergangsbereich zum Fuß einen Übergangsradius aufweist, ist dadurch seine Herstellung wesentlich vereinfacht, weil er problemlos aus der Vulkanisationsform entnommen werden kann. Zudem ermöglicht der Übergangsradius auch eine Art Hinterschnitt, was die Verbindung zwischen Fahrzeugluftreifen und Spike wesentlich verbessert.

Um die Haftung zwischen dem Pin und dem Gummimantel eines Spikes für einen erfindungsgemäßen Fahrzeugluftreifen zu verbessern, geht ein weiterführender Vorschlag nach der Erfindung dahin, dass der Fuß des Spikes, in Richtung freies Ende des Pins betrachtet, in einen Absatz übergeht, in den der Pin eingesetzt oder eingeformt ist. Der Absatz hat damit eine Doppelfunktion. Einerseits dient er der besseren Anhaftung des Gummimantels, wozu der Absatz beispielsweise auch zusätzliche Einkerbungen, Rändelungen oder Ähnliches entlang seiner Außenmantelfläche aufweisen kann. Andererseits besteht auf diese Weise die Möglichkeit, den Pin unter Bildung eines Presssitzes in den Fuß einzufügen, wofür ein entsprechender Materialquerschnitt erforderlich ist.

Eine besonders einfache Ausführungsvariante des Absatzes besteht darin, dass dieser eine überwiegend kreiszylinderförmige, eine unrunde und/oder polygonale Querschnittsgeometrie aufweist. Darüber hinaus oder ergänzend ist es jedoch ebenso möglich, den Absatz in Richtung des freien Endes des Pins konisch auszubilden oder zumindest einen konischen Abschnitt an dem Absatz vorzusehen.

Wie zuvor bereits ausgeführt wurde, kann die axiale Erstreckung des Gummimantels vom Fuß bis unmittelbar unter das freie Ende des Pins verlaufen. Alternativ zu diesem Lösungsvorschlag ist es jedoch auch möglich und für die Umsetzbarkeit der Erfindung ausreichend, wenn der Gummimantel nur von dem Absatz ausgehend, bis unmittelbar unterhalb des freien Endes des Pins ausgebildet ist.

Der Fuß und/oder der Absatz können entsprechend einer Weiterbildung der Erfindung zumindest abschnittsweise eine profilierte Oberfläche aufweisen, wobei unter einer profilierten Oberfläche die Einbringung unterschiedlichster Geometrien in die Oberfläche des Fußes beziehungsweise des Absatzes zu verstehen ist. Diese Maßnahme dient letztlich dem Zweck, die Anhaftung des Gummimantels an dem Absatz beziehungsweise am Fuß zu verbessern beziehungsweise auch eine verbesserte Einbindung des Spikes in den Fahrzeugluftreifen zu ermöglichen.

Der Pin kann entsprechend einer vorteilhaften Ausgestaltung eine kreisrunde oder polygonale Geometrie aufweisen, wobei unter der polygonalen Geometrie Dreiecksformen oder mehreckige Ausführungen zu verstehen sind. Durch die Wahl unterschiedlicher Geometrien kann eine verbesserte Haftung auf dem winterlichen Untergrund erreicht werden. Zudem ist dadurch auch eine Verbesserung der Anhaftung des Gummimantels im Bereich des Pins gegeben.

Diesem Zweck dient ferner eine ergänzende oder alternative Variante der Ausführung des Pins, die darin besteht, dass der Pin zumindest im Bereich des freien Endes des Pins wenigstens eine Ausnehmung aufweist.

Da der gesamte Spike in eine korrespondierende Ausnehmung der Lauffläche des Fahrzeugluftreifens eingesetzt wird, ist es vorteilhaft, wenn der Spike Abschnitte aufweist, die einen festen Sitz innerhalb des verformbaren Gummiwerkstoffes des Fahrzeugluftreifens ermöglichen. Auf diese Weise kann sowohl die Beschädigung, als auch der Verlust des Spikes wirksam vermieden werden. Um einen festen Sitz in dem Gummiwerkstoff des Fahrzeugluftreifens zu erreichen, geht ein weiterführender Vorschlag der Erfindung dahin, dass der Fuß zumindest abschnittsweise eine kreiszylindrische oder unrunde, zykloide oder ovale Geometrie und insgesamt eine größere Querschnittsfläche als der Pin aufweist.

Wie bereits ausgeführt wurde, ist in der Lauffläche des Fahrzeugluftreifens für jeden einzusetzenden Spike eine separate und bevorzugt komplementär zu dem Spike gestaltete Ausnehmung vorgesehen, in die der Spike unter Bildung eines Presssitzes eingefügt wird. Der Presssitz ist deshalb von Bedeutung, weil dadurch eine feste Haftung zwischen der Innenoberfläche der Ausnehmung des Fahrzeugluftreifens und der Außenoberfläche des Spikes, insbesondere der Außenoberfläche des Gummimantels erreicht wird. Zusätzlich unterstützend für die Fixierung des Spikes dienen dabei auch die zuvor bereits erwähnten geometrischen Auslegungen des Fußes des Spikes.

Neben dem Presssitz, mit dem der Spike in die Ausnehmung in der Lauffläche des Fahrzeugluftreifens eingefügt wird, kann zusätzlich eine stoffschlüssige Verbindung hergestellt werden, wobei hierfür zwischen der Außenoberfläche des Gummimantels und der Innenoberfläche der Ausnehmung ein Haftvermittler eingebracht wird. Hierzu liegt es ebenso im Bereich der Erfindung, den Gummimantel in die Ausnehmung einzuvulkanisieren. Als Haftvermittler können beispielsweise Klebstoffe oder vernetzende Haftvermittler, wie zum Beispiel "Chemosil" Verwendung finden.

Darüber hinaus besteht eine Lösung der Erfindung darin, zwischen der äußeren Oberfläche des Pins und der inneren Oberfläche des Gummimantels einen Haftvermittler vorzusehen. Dabei wird der Gummimantel mittels des Haftvermittlers stoffschlüssig mit dem Pin und/oder dem Fuß verbunden und vorzugsweise an dem Pin und/oder dem Fuß anvulkanisiert.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung.

Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: ausschnittsweise und im Schnitt einen seitlichen Blick auf einen Fahrzeugluftreifen mit Untergrundberührung,
- Figur 2:: eine erste Ausführungsvariante eines Spikes,
- Figur 3:: eine zweite Ausführungsvariante eines Spikes,
- Figur 4:: eine dritte Ausführungsvariante eines Spikes,
- Figur 5:: eine vierte Ausführungsvariante eines Spikes,
- Figur 6:: eine fünfte Ausführungsvariante eines Spikes,
- Figur 7:: eine sechste Ausführungsvariante eines Spikes,
- Figur 8:: eine siebente Ausführungsvariante eines Spikes,
- Figur 9:: eine achte Ausführungsvariante eines Spikes,
- Figur 10:: eine erste, erfindungsgemäße Ausführungsvariante eines Spikes,
- Figur 11:: den Schnittverlauf XI-XI aus Figur 10 in einer ersten Ausführung des Gummikörpers
- und Figur 12:: den Schnittverlauf XI-XI aus Figur 10 in einer zweiten Ausführung des Gummikörpers.

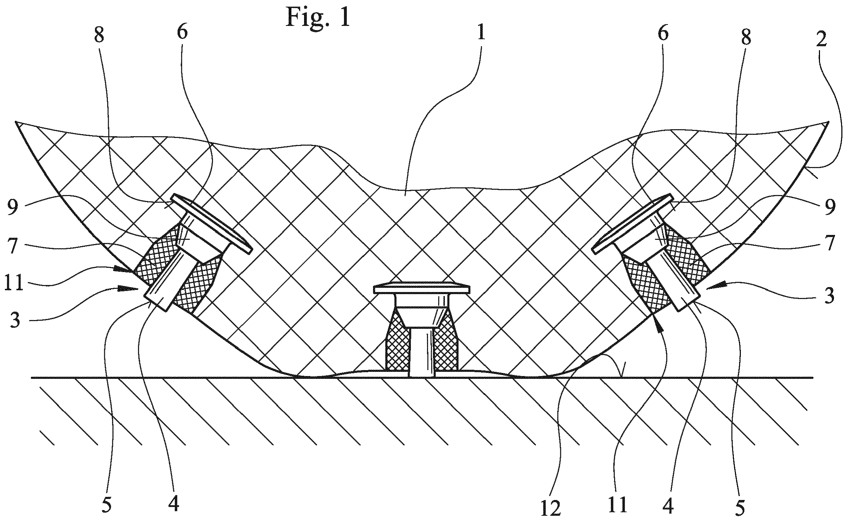

Die Figuren 1-9 veranschaulichen jeweils verschiedene Ausführungsvarianten eines Spikes, wobei in der Figur 1 zunächst ausschnittsweise und im Schnitt ein seitlicher Blick auf einen Fahrzeugluftreifen 1 gezeigt ist, der auf einem Untergrund 12 abrollt und entlang seines Umfanges eine Vielzahl einzelner Spikes 3 aufweist. Jeder der Spikes 3 ist dabei in die profilierte Lauffläche 2 des Fahrzeugluftreifens 1 eingesetzt, wobei lediglich ein freies Ende 5 eines Pins 4 des Spikes 3 aus der Lauffläche 2 des Fahrzeugluftreifens 1 hervorsteht. Der Pin 4 besteht im vorliegenden Fall aus einem Hartmetall, bei dem es sich beispielsweise um Wolframkarbid handeln kann, was hierbei problemlos möglich ist, weil der Spike 3 insgesamt von einem Gummimantel 7 umgeben wird, der in eine korrespondierende Ausnehmung 11 der Lauffläche 2 eingepresst ist. An der dem freien Ende 5 des Pins 4 gegenüberliegenden Seite des Spikes 3 weist dieser einen Fuß 6 auf, dessen projizierte Fläche oder Querschnittsfläche größer ist, als die des Pins 4, was deutlich aus der Darstellung in Figur 1 hervorgeht. Der Fuß 6 des Spikes 3 geht, in axialer Richtung betrachtet, in einen Absatz 9 über, der einerseits als Haftfläche für den Gummimantel 7 und andererseits zur Verbindung mit dem Pin 4 dient. Der Pin 4 wird in den Absatz 9 eingefügt beziehungsweise eingepresst oder über eine stoffschlüssige Verbindung mit dem Absatz 9 verbunden.

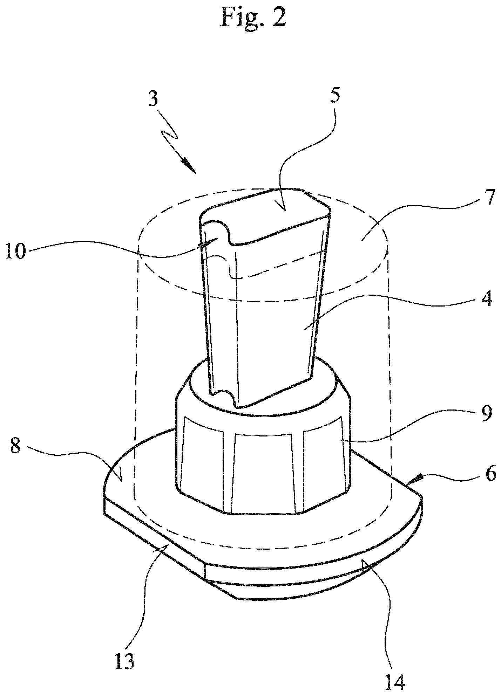

Aus den Figuren 2-12 gehen verschiedene Varianten eines Spikes 3 hervor, die sich zum Teil in Details voneinander unterscheiden und nicht einschränkend zu sehen sind. Vielmehr können die einzelnen Bauelemente eines jeden Spikes 3 unterschiedlich ausgeführt werden und in beliebigen Kombinationen miteinander zum Einsatz kommen.

In der Figur 2 ist ein Spike 3 dargestellt, bei dem aus Gründen der besseren Übersichtlichkeit der Gummimantel 7 lediglich durch gestrichelte Linien angedeutet ist. Der Gummimantel 7 weist hierbei eine annähernd kreiszylindrische Geometrie auf und erstreckt sich durchgehend von der Oberfläche 8 des Fußes 6 bis unmittelbar unterhalb des freien Endes 5 des Pins 4. Bei der Ausführungsvariante des Spikes 3 in Figur 2 besteht eine weitere Besonderheit darin, dass der Fuß 6 zwei parallel zueinander verlaufende, geradlinige Flanken 13 aufweist, deren Verbindung jeweils über einen gerundeten Abschnitt 14 geschaffen wird. Darüber hinaus geht der Fuß an seiner dem freien Ende 5 des Pins 4 zugewandten Oberfläche 8 in einen Absatz 9 über, der entlang seines Umfanges mehrere, in der Figur 2 nicht näher bezeichnete Flächenelemente aufweist, die von einzelnen Stegen unterbrochen sind. Der Fuß 6 und der Absatz 9 sind bei diesem Ausführungsbeispiel separate Bauelemente, die miteinander verbunden werden. Dies schließt jedoch auch die Ausführung von Fuß 6 und Absatz 9 als ein einstückiges Bauteil nicht grundsätzlich aus. Der Pin 4 ist in den Absatz 9 eingefügt, wobei anzumerken ist, dass der Fuß 6 und der Absatz 9 jeweils aus dem gleichen Werkstoff hergestellt sind, bei dem es sich vorliegend um einen Leichtmetallwerkstoff, konkret gesagt um Aluminium, handelt. Der in den Absatz 9 eingefügte Pin 4 besteht aus Hartmetall und weist einseitig eine Ausnehmung 10 auf, die seinen Eingriff bei winterlichem Untergrund verbessert.

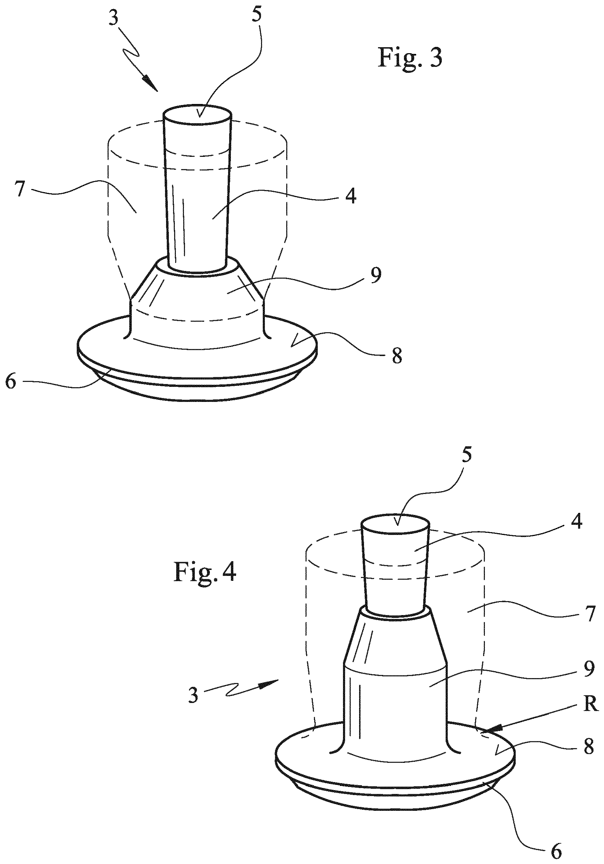

In Abweichung zu der zuvor beschriebenen Ausführungsvariante eines Spikes 3 zeigt die Figur 3 einen Spike 3, bei dem der Fuß 6 eine kreisrunde Geometrie aufweist. Auch hierbei geht der Fuß 6 an seiner dem freien Ende 5 des Pins 4 zugewandten Oberfläche 8 in einen Absatz 9 über, der ausgehend von einem kreiszylindrischen Querschnitt in einen konischen Teil übergeht und in den der Pin 4 eingesetzt ist. Der Gummimantel 7 ist hier ebenfalls nur andeutungsweise gezeigt. Von Bedeutung ist jedoch, dass der Gummimantel 7 im Bereich des freien Endes 5 des Pins 4 eine kreiszylindrische Geometrie aufweist, die in Richtung des Fußes 6 in eine taillierte Form übergeht. Dabei endet der Gummimantel 7 etwa dort, wo der konische Abschnitt des Absatzes 9 beginnt. Wie dies ebenfalls eindeutig aus der Darstellung in Figur 3 hervorgeht, bilden der Fuß 6 und der Absatz 9 eine bauliche Einheit.

In diesem Fall weist der Pin zudem entlang seiner Längserstreckung eine gleichbleibende, kreisrunde Querschnittsgeometrie auf.

Eine ähnliche Bauweise wie der im Zusammenhang mit der Figur 3 beschriebene Spike 3 weist auch der Spike 3 gemäß Figur 4 auf. Im Unterschied zu der zuvor beschriebenen Ausführungsformen wird hierbei jedoch der Absatz 9 in axialer Richtung erheblich verlängert, was aus dem wesentlich längeren kreiszylindrischen Abschnitt des Absatzes 9 ersichtlich wird. Diese Lösung hat den Vorteil, dass ein größerer Teil des Spikes 3 aus dem Leichtbauwerkstoff Aluminium hergestellt ist und damit eine zusätzliche Gewichtseinsparung erreicht werden kann. Der Pin 4, der in den konischen Abschnitt des Absatzes 9 eingefügt ist, weist hierbei nur eine geringe Länge auf. Bei dem Gummimantel 7 des Ausführungsbeispieles in Figur 4 wurde eine nur geringfügige Taillierung von dem freien Ende 5 des Pins 4 zur Oberfläche 8 des Fußes 6 vorgesehen.

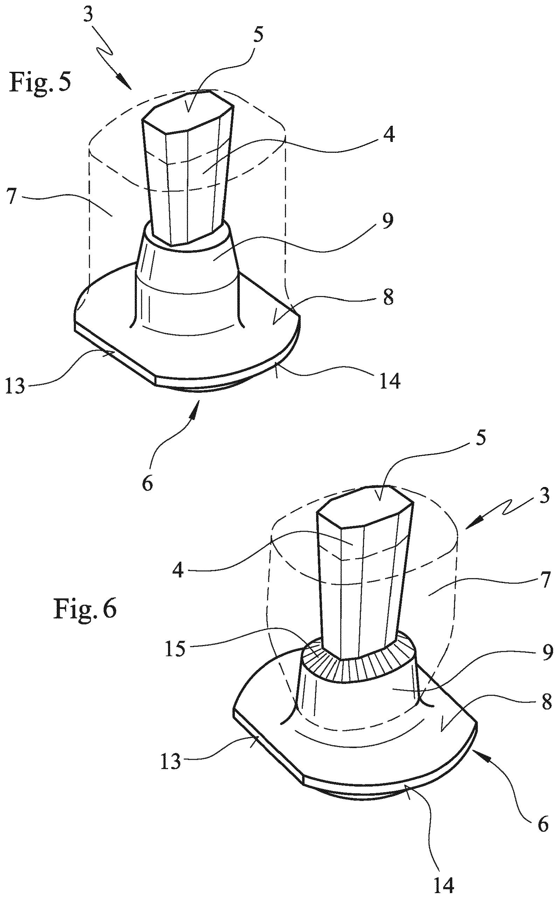

Die Figur 5 zeigt wiederum einen Fuß 6, wie er bereits im Zusammenhang mit der Darstellung in Figur 2 erläutert wurde. Auch hierbei weist der Fuß 6 zwei parallel zueinander verlaufende, geradlinige Flanken 13 auf, deren Verbindung jeweils durch einen gerundeten Abschnitt 14 geschaffen ist. Zentral geht der Fuß 6 an seiner Oberfläche 8 in den zunächst mit einer kreiszylindrischen Geometrie ausgestatteten und anschließend in einen Konus übergehenden Absatz 9 über. In diesen Absatz 9 ist in diesem Fall ein polygonal gestalteter Pin 4 eingefügt, der hierbei als Achteck ausgeführt ist, was den Vorteil einer verbesserten Haftung auf winterlichem Untergrund, insbesondere auf Eisoberflächen mit sich bringt. Der vorzugsweise unrunde Gummimantel 7 ist bei dieser Lösung mit einem Übergangsradius im Bereich der Oberfläche 8 des Fußes 6 ausgestattet und verfügt ansonsten über eine annähernd gleichbleibende Querschnittsgeometrie bis unmittelbar unterhalb des freien Endes 5 des Pins 4.

Aus der Figur 6 geht eine Variante eines Spikes 3 hervor, bei der der Pin 4 ebenfalls polygonal und im konkreten Fall als Achteck gestaltet wurde. Die Besonderheit dieser Ausführungsvariante besteht darin, dass der Absatz 9 eine unrunde Querschnittsgeometrie aufweist und an seiner Oberseite mit einer Rändelung 15 ausgestattet ist, die eine maßgebliche Verbesserung der Anhaftung des Gummimantels 7 ermöglicht. Auch hierbei bilden der Fuß 6 und der Absatz 9 ein einstückiges Bauteil. Der vorzugsweise unrunde Gummimantel 7 verfügt über eine taillierte Form im Bereich oberhalb der Oberfläche 8 des Fußes 6 und geht in Richtung des freien Endes 5 des Pins 4 in einen zu dem Absatz 9 korrespondierenden, ovalen Querschnitt über.

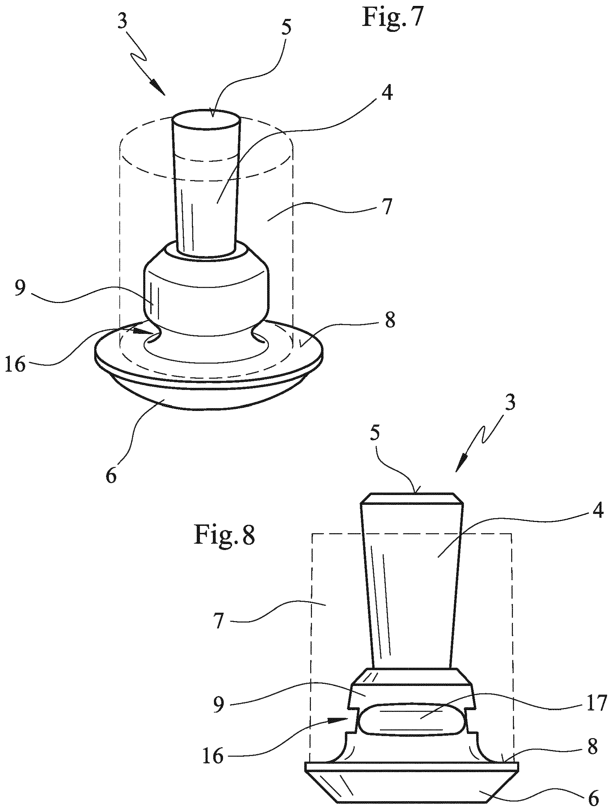

Schließlich zeigt die Darstellung in Figur 7 eine weitere Ausführungsvariante eines Spikes 3 für einen Fahrzeugluftreifen 1, bei dem die Besonderheit darin besteht, dass der Spike über einen Fuß 6 mit einer schüsselförmigen Geometrie verfügt, von dessen Oberfläche 8 ausgehend ein Absatz 9 ausgebildet ist, der sich in seinem dem Fuß 6 und dem Pin 4 zugewandten Abschnitt jeweils verjüngt. Zentral ist der Absatz 9 mit einer kreiszylindrischen Querschnittsgeometrie ausgestattet. Durch diese spezielle Ausbildung des Absatzes 9 entsteht zwischen der Oberfläche 8 des Fußes 6 und dem Absatz 9 ein Hinterschnitt 16, in den ein Teil des Gummimantels 7 formschlüssig eingreift. Auf diese Weise wird die Verbindung zwischen dem Fuß 6, dem Absatz 9, dem Pin 4 und dem Gummimantel 7 in entscheidendem Maße verbessert. Eine stoffschlüssige Verbindung ist nicht mehr unbedingt erforderlich.

Bei der Ausführungsvariante in Figur 8 unterscheidet sich die Ausführung des Pins 4 von den zuvor beschriebenen Lösungen. Der Pin weist hierbei eine sich von seinem fußseitigen Abschnitt konisch erweiternde Geometrie auf. Anders ausgedrückt sind die Abmessungen des freien Endes 5 des Pins 4 größer, als die des in den Absatz 9 eingefügten Abschnittes des Pins 4. Eine weitere Variation des Spikes 3 in Figur 8 ist in der Ausführung des Absatzes 9 zu sehen, der sowohl zwei einander gegenüberliegend angeordnete Hinterschnitte 16 aufweist, als auch je eine Kerbe 17 in den Bereichen, die nicht mit einem Hinterschnitt 16 ausgestattet sind. Der Absatz 9 weist hierbei folglich entlang seiner Außenmantelfläche unterschiedliche Geometrien auf. Darüber hinaus ist aus der Darstellung in Figur 8 auch erkennbar, dass die Oberfläche 8 des Fußes 6 einen Übergangsradius aufweist.

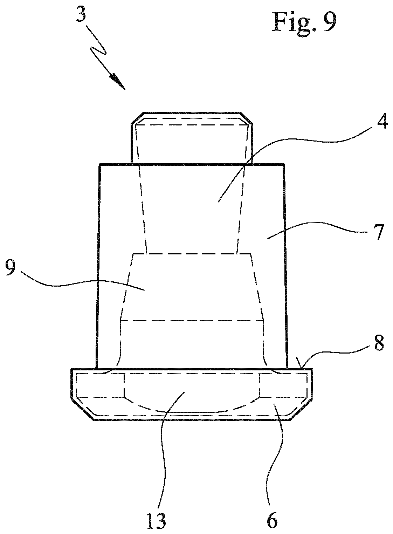

Eine in ihrer Fertigung besonders einfach herstellbare Lösung für einen Spike 3 eines erfindungsgemäßen Fahrzeugluftreifens 1 zeigt die Figur 9. Hierbei wurde der Gummimantel 7 beginnend an der Oberfläche 8 des Fußes 6 bis unterhalb des freien Endes 5 des Pins 4 ausgeführt. Die Besonderheit dieser Lösung ist jedoch darin zu sehen, dass eine Gummischicht auch die übrigen Abschnitte des Spikes 3 überzieht. Folglich weist auch das freie Ende 5 des Pins 4 und der Fuß 6 einen derartigen Gummiüberzug auf.

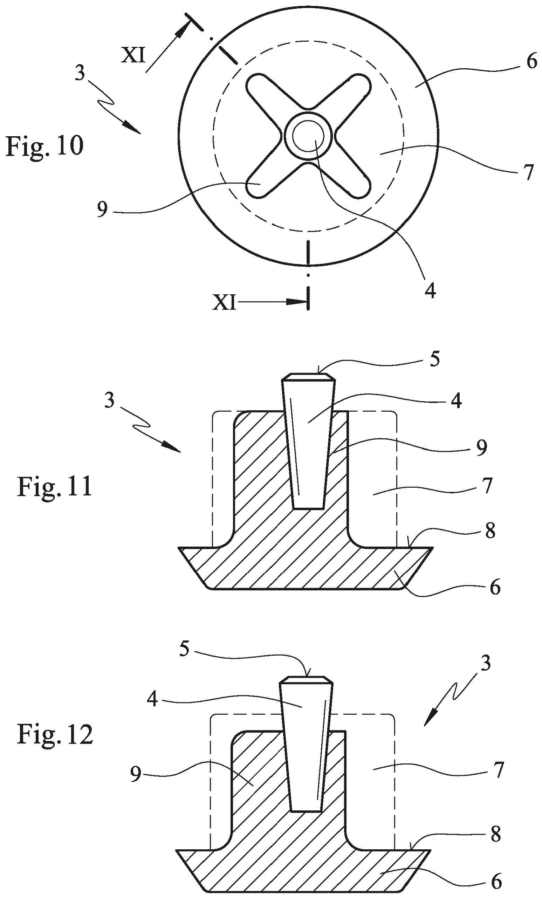

Weiterhin sind in den Figuren 10 bis 12 Varianten eines Spikes für einen erfindungsgemäßen Fahrzeugluftreifen 1 dargestellt, bei dem der Absatz 9, in Längsrichtung des Pins 4 betrachtet, eine sternförmige Gestalt aufweist, die durch vertikal, also in Längsrichtung des Pins verlaufende Rippen gebildet wird. Diese ist aus thermodynamischer Sicht vorteilhaft, weil hierdurch der Wärmeübergang verbessert wird.

Die Figuren 11 und 12 zeigen jeweils den Schnittverlauf XI-XI aus Figur 10, wobei zwei unterschiedliche Ausführungen des Gummimantels 7 veranschaulicht sind. In der Figur 11 fällt der obere Abschnitt des Gummimantels 7 mit der Oberseite des Absatzes 9 zusammen, während in der Figur 12 der Gummimantel 7 den Absatz 9 vollständig überdeckt und in seinem Inneren einschließt. Der Gummimantel 7 verläuft dabei jeweils bis zu der freien Oberfläche 8 des Fußes 6 des Spikes 3.

### Bezugszeichenliste

- 1: Fahrzeugluftreifen
- 2: Lauffläche
- 3: Spike
- 4: Pin
- 5: Freies Ende (Spitze)
- 6: Fuß
- 7: Gummimantel
- 8: Oberfläche des Fußes
- 9: Absatz
- 10: Ausnehmung (im Pin)
- 11: Ausnehmung (in der Lauffläche)
- 12: Untergrund
- 13: Flanke (geradlinig)
- 14: Gerundeter Abschnitt
- 15: Rändelung
- 16: Taillierung / Hinterschnitt
- 17: Kerbe

- R: Radius

## Patentansprüche

1. Fahrzeugluftreifen (1) mit einer profilierten Lauffläche (2), in die eine Vielzahl einzelner Spikes (3) integriert ist, von denen jeder Spike (3) einen Pin (4) mit einem aus der Lauffläche (2) hervorstehenden, freien Ende (5) und einem diesem freien Ende (5) gegenüberliegend angeordneten Fuß (6) aufweist, dessen Fläche größer ist, als die des Pins (4), wobei der Pin (4) und/oder der Fuß (6) zumindest abschnittsweise in einen Gummimantel (7) integriert und der Fuß (6) des Spikes (3) in Richtung freies Ende (5) des Pins (4) betrachtet, in einen Absatz (9) übergeht, in den der Pin (4) eingesetzt oder eingeformt ist,
**dadurch gekennzeichnet, dass**
der Fuß (6) und/oder der Absatz (9) zumindest abschnittsweise eine durch in Längsrichtung des Pins (4) verlaufende Rippen gebildete flügel- oder sternförmige Querschnittsgeometrie aufweist.

2. .Fahrzeugluftreifen nach Anspruch 1,
**dadurch gekennzeichnet, dass**
der Pin (4) in den Fuß (6) eingefügt oder eingeformt ist.

3. Fahrzeugluftreifen nach einem der vorstehend genannten Ansprüche,
**dadurch gekennzeichnet, dass**
der Pin (4) und der Fuß (6) aus unterschiedlichen Werkstoffen bestehen.

4. Fahrzeugluftreifen nach einem der vorstehend genannten Ansprüche,
**dadurch gekennzeichnet, dass**
der Pin (4) aus einem harten Werkstoff, wie Hartmetall und der Fuß (6) aus einem vergleichsweise weicheren Werkstoff, wie Aluminium oder Kunststoff besteht.

5. Fahrzeugluftreifen nach einem der vorstehend genannten Ansprüche,
**dadurch gekennzeichnet, dass**
der Gummimantel (7) eine von der Lauffläche (2) des Fahrzeugluftreifens (1) abweichende Shore-Härte aufweist oder aus einer von der Lauffläche (2) abweichenden Gummimischung besteht.

6. Fahrzeugluftreifen nach einem der vorstehend genannten Ansprüche,
**dadurch gekennzeichnet, dass**
der Gummimantel (7) den gesamten Pin (4) und Fuß (6) vollständig umhüllend ausgeführt ist.

7. Fahrzeugluftreifen nach einem der Ansprüche 1 bis 5,
**dadurch gekennzeichnet, dass**
der Gummimantel (7) den Fuß (6) vollständig umhüllt und durchgehend bis unmittelbar unterhalb des freien Endes (5) des Pins (4) ausgebildet ist.

8. Fahrzeugluftreifen nach einem der Ansprüche 1 bis 5,
**dadurch gekennzeichnet, dass**
der Gummimantel (7), ausgehend von der dem freien Ende (5) des Pins (4) zugewandten Oberfläche (8) des Fußes (6) bis unmittelbar unterhalb des freien Endes (5) des Pins (4) ausgebildet ist.

9. Fahrzeugluftreifen nach einem der vorstehend genannten Ansprüche,
**dadurch gekennzeichnet, dass**
der Gummimantel (7) zumindest abschnittsweise eine kreiszylindrische, kegelige, unrunde, polygonale und/oder taillierte Außenform aufweist.

10. Fahrzeugluftreifen nach einem der vorstehend genannten Ansprüche,
**dadurch gekennzeichnet, dass**
der Gummimantel (7) im Übergangsbereich zum Fuß (6) einen Übergangsradius (R) aufweist.

11. Fahrzeugluftreifen nach einem der vorstehend genannten Ansprüche
**dadurch gekennzeichnet, dass**
der Absatz (9) eine überwiegend kreiszylinderförmige, eine unrunde und/oder polygonale Querschnittsgeometrie aufweist.

12. Fahrzeugluftreifen nach einem der vorstehend genannten Ansprüche
**dadurch gekennzeichnet, dass**
der Absatz (9) in Richtung des freien Endes (5) des Pins (4) konisch ausgebildet ist oder einen konischen Abschnitt aufweist.

13. Fahrzeugluftreifen nach einem der vorstehend genannten Ansprüche
**dadurch gekennzeichnet, dass**
der Gummimantel (7) nur von dem Absatz (9) ausgehend, bis unmittelbar unterhalb des freien Endes (5) des Pins (4) ausgebildet ist.

14. Fahrzeugluftreifen nach einem der vorstehend genannten Ansprüche
**dadurch gekennzeichnet, dass**
der Fuß (6) und/oder der Absatz (9) zumindest abschnittsweise eine profilierte Oberfläche aufweist beziehungsweise aufweisen.

15. Fahrzeugluftreifen nach einem der vorstehend genannten Ansprüche,
**dadurch gekennzeichnet, dass**
der Pin (4) eine kreisrunde oder polygonale Geometrie aufweist.

16. Fahrzeugluftreifen nach einem der vorstehend genannten Ansprüche,
**dadurch gekennzeichnet, dass**
der Pin (4) zumindest im Bereich des freien Endes (5) des Pins (4) wenigstens eine Ausnehmung (10) aufweist.

17. Fahrzeugluftreifen nach einem der vorstehend genannten Ansprüche,
**dadurch gekennzeichnet, dass**
der Fuß (6) zumindest abschnittsweise eine kreiszylindrische oder unrunde, zykloide oder ovale Geometrie aufweist.

18. Fahrzeugluftreifen nach einem der vorstehend genannten Ansprüche,
**dadurch gekennzeichnet, dass**
der Fahrzeugluftreifen (1) in der Lauffläche (2) Ausnehmungen (11) aufweist, in die der Spike (3) unter Bildung eines Stoffschlusses oder unter Bildung eines Presssitzes eingefügt ist.

19. Fahrzeugluftreifen nach Anspruch 18,
**dadurch gekennzeichnet, dass**
zwischen der Außenoberfläche des Gummimantels (7) und der Innenoberfläche der Ausnehmung (11) ein Haftvermittler eingebracht oder der Gummimantel (7) in die Ausnehmung (11) einvulkanisiert ist.

20. Fahrzeugluftreifen nach einem der vorstehend genannten Ansprüche,
**dadurch gekennzeichnet, dass**
der Gummimantel (7) mittels eines Haftvermittlers stoffschlüssig mit dem Pin (4) und/oder dem Fuß (6) verbunden, vorzugsweise an dem Pin (4) und/oder dem Fuß (6) anvulkanisiert ist.

## Claims

1. Pneumatic vehicle tyre (1) having a profiled tread (2) into which there is integrated a multiplicity of individual spikes (3), of which each spike (3) has a pin (4) with a free end (5) projecting out of the tread (2) and with a foot (6) arranged opposite said free end (5), the area of which foot is larger than that of the pin (4), wherein the pin (4) and/or the foot (6) is integrated at least in sections into a rubber casing (7), and the foot (6) of the spike (3) transitions, as viewed in the direction of the free end (5) of the pin (4), into a pedestal (9) into which the pin (4) is inserted or moulded,
**characterized in that**
the foot (6) and/or the pedestal (9) has, at least in sections, a vaned or star-shaped cross-sectional geometry formed by ribs running in a longitudinal direction of the pin (4).

2. Pneumatic vehicle tyre according to Claim 1, **characterized in that**
the pin (4) is inserted or moulded into the foot (6).

3. Pneumatic vehicle tyre according to any of the preceding claims,
**characterized in that**
the pin (4) and the foot (6) are composed of different materials.

4. Pneumatic vehicle tyre according to any of the preceding claims,
**characterized in that**
the pin (4) is composed of a hard material, such as hard metal, and the foot (6) is composed of a relatively softer material, such as aluminium or plastic.

5. Pneumatic vehicle tyre according to any of the preceding claims,
**characterized in that**
the rubber casing (7) has a Shore hardness which differs from that of the tread (2) of the pneumatic vehicle tyre (1), or is composed of a different rubber mixture than the tread (2).

6. Pneumatic vehicle tyre according to any of the preceding claims,
**characterized in that**
the rubber casing (7) is designed to fully enclose the entire pin (4) and foot (6).

7. Pneumatic vehicle tyre according to any of Claims 1 to 5,
**characterized in that**
the rubber casing (7) fully encloses the foot (6) and is formed so as to extend continuously as far as directly below the free end (5) of the pin (4).

8. Pneumatic vehicle tyre according to any of Claims 1 to 5,
**characterized in that**
the rubber casing (7) is formed so as to extend from that surface (8) of the foot (6) which faces towards the free end (5) of the pin (4) as far as directly below the free end (5) of the pin (4).

9. Pneumatic vehicle tyre according to any of the preceding claims,
**characterized in that**
the rubber casing (7) has a circular cylindrical, cone-shaped, non-circular, polygonal and/or waisted external shape at least in sections.

10. Pneumatic vehicle tyre according to any of the preceding claims,
**characterized in that**
the rubber casing (7) has a transition radius (R) in the transition region to the foot (6).

11. Pneumatic vehicle tyre according to any of the preceding claims,
**characterized in that**
the pedestal (9) has a predominantly circular cylindrical, non-circular and/or polygonal cross-sectional geometry.

12. Pneumatic vehicle tyre according to any of the preceding claims,
**characterized in that**
the pedestal (9) is of conical form, or has a conical section, in the direction of the free end (5) of the pin (4) .

13. Pneumatic vehicle tyre according to any of the preceding claims,
**characterized in that**
the rubber casing (7) is formed so as to extend only from the pedestal (9) as far as directly below the free end (5) of the pin (4).

14. Pneumatic vehicle tyre according to any of the preceding claims,
**characterized in that**
the foot (6) and/or the pedestal (9) have/has a profiled surface at least in sections.

15. Pneumatic vehicle tyre according to any of the preceding claims,
**characterized in that**
the pin (4) has a circular or polygonal geometry.

16. Pneumatic vehicle tyre according to any of the preceding claims,
**characterized in that**
the pin (4) has at least one recess (10) at least in the region of the free end (5) of the pin (4).

17. Pneumatic vehicle tyre according to any of the preceding claims,
**characterized in that**
the foot (6) has a circular cylindrical or non-circular, cycloid or oval geometry at least in sections.

18. Pneumatic vehicle tyre according to any of the preceding claims,
**characterized in that**
the pneumatic vehicle tyre (1) has, in the tread (2), recesses (11) into which the spike (3) is inserted with the formation of a cohesive connection or with the formation of an interference fit.

19. Pneumatic vehicle tyre according to Claim 18, **characterized in that**
an adhesion promoter is introduced between the outer surface of the rubber casing (7) and the inner surface of the recess (11), or the rubber casing (7) is vulcanized into the recess (11).

20. Pneumatic vehicle tyre according to any of the preceding claims,
**characterized in that**
the rubber casing (7) is cohesively connected to the pin (4) and/or to the foot (6) by means of an adhesion promoter, preferably is vulcanized onto the pin (4) and/or onto the foot (6).

## Revendications

1. Pneumatique de véhicule (1) muni d'une surface de roulement profilée (2), dans laquelle une pluralité de crampons individuels (3) est intégrée, chaque crampon (3) comprenant une pointe (4) ayant une extrémité libre (5) faisant saillie à partir de la surface de roulement (2) et un pied (6) agencé à l'opposé de cette extrémité libre (5), dont la surface est plus grande que celle de la pointe (4), la pointe (4) et/ou le pied (6) étant intégrés au moins en sections dans une enveloppe en caoutchouc (7) et le pied (6) du crampon (3), tel que vu en direction de l'extrémité libre (5) de la pointe (4), se transformant en un épaulement (9), dans lequel la pointe (4) est insérée ou moulée,
**caractérisé en ce que**
le pied (6) et/ou l'épaulement (9) présente au moins en sections une géométrie de section transversale en forme d'ailette ou d'étoile formée par des nervures s'étendant dans la direction longitudinale de la pointe (4) .

2. Pneumatique de véhicule selon la revendication 1, **caractérisé en ce que** la pointe (4) est insérée ou moulée dans le pied (6).

3. Pneumatique selon l'une quelconque des revendications précédentes, **caractérisé en ce que** la pointe (4) et le pied (6) sont constitués de matériaux différents.

4. Pneumatique selon l'une quelconque des revendications précédentes, **caractérisé en ce que** la pointe (4) est constituée d'un matériau dur, tel qu'un métal dur, et le pied (6) est constitué d'un matériau comparativement plus tendre, tel que de l'aluminium ou une matière plastique.

5. Pneumatique selon l'une quelconque des revendications précédentes, **caractérisé en ce que** l'enveloppe en caoutchouc (7) présente une dureté Shore différente de la surface de roulement (2) du pneumatique de véhicule (1) ou est constituée d'un mélange de caoutchouc différent de la surface de roulement (2).

6. Pneumatique selon l'une quelconque des revendications précédentes, **caractérisé en ce que** l'enveloppe en caoutchouc (7) est réalisée sous une forme entourant entièrement l'ensemble de la pointe (4) et du pied (6).

7. Pneumatique selon l'une quelconque des revendications 1 à 5, **caractérisé en ce que** l'enveloppe en caoutchouc (7) entoure entièrement le pied (6) et est configurée sous une forme continue jusqu'à directement en dessous de l'extrémité libre (5) de la pointe (4).

8. Pneumatique selon l'une quelconque des revendications 1 à 5, **caractérisé en ce que** l'enveloppe en caoutchouc (7) est formée en partant de la surface (8) du pied (6) tournée vers l'extrémité libre (5) de la pointe (4) jusqu'à directement en dessous de l'extrémité libre (5) de la pointe (4).

9. Pneumatique de véhicule selon l'une quelconque des revendications précédentes, **caractérisé en ce que** l'enveloppe en caoutchouc (7) présente au moins en sections une forme extérieure cylindrique circulaire, conique, non ronde, polygonale et/ou taillée.

10. Pneumatique de véhicule selon l'une quelconque des revendications précédentes, **caractérisé en ce que** l'enveloppe en caoutchouc (7) présente un rayon de transition (R) dans la zone de transition vers le pied (6) .

11. Pneumatique de véhicule selon l'une quelconque des revendications précédentes, **caractérisé en ce que** l'épaulement (9) présente une géométrie de section transversale essentiellement de forme cylindrique circulaire, non ronde et/ou polygonale.

12. Pneumatique de véhicule selon l'une quelconque des revendications précédentes, **caractérisé en ce que** l'épaulement (9) est configuré sous forme conique en direction de l'extrémité libre (5) de la pointe (4) ou comprend une section conique.

13. Pneumatique de véhicule selon l'une quelconque des revendications précédentes, **caractérisé en ce que** l'enveloppe en caoutchouc (7) est formée uniquement à partir de l'épaulement (9) jusqu'à directement en dessous de l'extrémité libre (5) de la pointe (4).

14. Pneumatique de véhicule selon l'une quelconque des revendications précédentes, **caractérisé en ce que** le pied (6) et/ou l'épaulement (9) présente ou présentent au moins en sections une surface profilée.

15. Pneumatique de véhicule selon l'une quelconque des revendications précédentes, **caractérisé en ce que** la pointe (4) présente une géométrie circulaire ou polygonale.

16. Pneumatique de véhicule selon l'une quelconque des revendications précédentes, **caractérisé en ce que** la pointe (4) comprend au moins un évidement (10) au moins dans la zone de l'extrémité libre (5) de la pointe (4).

17. Pneumatique de véhicule selon l'une quelconque des revendications précédentes, **caractérisé en ce que** le pied (6) présente au moins en sections une géométrie cylindrique circulaire ou non ronde, cycloïde ou ovale.

18. Pneumatique de véhicule selon l'une quelconque des revendications précédentes, **caractérisé en ce que** le pneumatique de véhicule (1) comprend des évidements (11) dans la surface de roulement (2), dans lesquels le crampon (3) est inséré en formant un accouplement de matière ou en formant un ajustement serré.

19. Pneumatique de véhicule selon la revendication 18, **caractérisé en ce qu'**un promoteur d'adhésion est introduit entre la surface extérieure de l'enveloppe en caoutchouc (7) et la surface intérieure de l'évidement (11), ou l'enveloppe en caoutchouc (7) est vulcanisée dans l'évidement (11).

20. Pneumatique de véhicule selon l'une quelconque des revendications précédentes, **caractérisé en ce que** l'enveloppe en caoutchouc (7) est reliée par accouplement de matière avec la pointe (4) et/ou le pied (6) au moyen d'un promoteur d'adhésion, de préférence vulcanisée sur la pointe (4) et/ou le pied (6) .
